# EUROPEAN PATENT APPLICATION

(11) **EP 2 206 684 A1**
(43) Date of publication of application: **14.07.2010**
(21) Application number: 09167486.1
(22) Date of filing: 07.08.2009
(51) Int. Cl.: C02F 1/28, C02F 103/20

(54) **Device and process for obtaining biomasses from an organic sewage, particularly a sewage of zootechnic origin**

(30) Priority: 09.01.2009 IT TO20090008
(71) Applicant: Marcopolo Engineering S.P.A. Sistemi Ecologici, 12011 Borgo S. Dalmazzo (Cuneo) (IT)
(72) Inventor: Bertolotto, Antonio, I-12011, Borgo S. Dalmazzo (Cuneo) (IT)
(74) Representative: Gallarotti, Franco

(57) **Abstract**

Described herein is a device for obtaining and/or enriching biomass from an organic sewage having a liquid fraction and a solid fraction, such as pig sewage, or else of agroindustrial origin, such as milk serum or agroindustrial process water. The device (1) comprises a treatment section (10), which includes a plurality of percolation columns (11a-11f), and each percolation column (11a-11f) has a structure (13) set between an upper inlet of the sewage (14) and a lower tank (16) for collection of the liquid fraction of the sewage. The structure (13) defines, between the upper inlet (14) and the lower tank (16), a flow-path along which the sewage can flow. Housed sequentially along the flow-path is a plurality of drawer containers (12), each of which has a bottom provided with openings of dimensions such as to withhold a material that constitutes a corresponding filtering mass. The drawer containers (12) extend substantially parallel to one another in a direction transverse to the flow-path and stacked on top of one another so as to be traversed sequentially at least by the liquid fraction of the sewage. The drawer containers (12) can be slid out of the structure (13) to enable a removal and replacement of the filtering masses each time saturated, as well as a variation of the position in height of the drawer containers (12) within the flow-path.

## Description

### Field of the invention

The present invention relates in general to devices and processes for depuration of organic sewage, particularly sewage of zootechnic origin having a high liquid component or fraction, such as pig sewage, aimed at obtaining and/or enriching biomasses.

More particularly, the invention relates to a device and to a process designed to reduce nitrates and other excess elements which are negative in the use, in agriculture, of zootechnic sewage, especially sewage resulting from pig-breeding activities, said reduction being obtained by capturing said excess elements in order to reuse them, for example in agriculture, in other forms that do not have a harmful impact on the environment.

The term "*biomass*" identifies in general any substance of organic matrix, whether vegetable or animal, that is to be used for energy purposes or for the production of agricultural amending substances or fertilizers.

### Prior art

A very widespread technique for reducing the environmental impact of zootechnic sewage is active-sludge biological depuration, with nitrification and denitrification for neutralizing the nitrates. Unfortunately, in the financial economy of intensive animal breeding, sewage depuration currently only represents costs that are difficult to amortize. Consequently, the animal-breeding sector, in particular the pig-breeding sector, calls for technologies that treat the sewage in order to recover it to obtain benefits and savings.

A technique that may potentially be used for the treatment of organic zootechnic sewage with high liquid fraction is that of its recovery with the use of biomasses, said recovery being obtainable via percolation. The technique of percolation basically consists of a filtration of the sewage through a solid substance, a biomass in the case in point. Percolation advantageously performs a process of depuration that enables reuse, for example in the agricultural sector, of the residual liquid fraction of the treated sewage, and in the case in point, enables enrichment of the original biomass.

Known percolation systems are, however, designed for occupying large spaces and so far have not been adopted to a widespread extent precisely on account of the difficulty of authorization that such works require owing to the dimensions and costs that they represent.

To obtain filtering masses in a percolation process it is known to exploit the properties of so-called *flaking materials*, which are typically represented by fibrous materials in flakes or fine granules. These materials, once saturated following upon the percolation process, can be used to advantage for the production of energy and of amending substances and fertilizers. Also the systems of a known type based upon the use of flaking materials are, however, of large dimensions and complex to produce and hence costly. The known systems moreover entail high levels of energy consumption and operating costs that it would be desirable to reduce.

### Summary of the invention

The aim of the present invention is basically to provide a device of the type referred to at the start of the present description, which uses in particular flaking material as filtering mass in a percolation process, that is simple to produce and compact, as well as being distinguished by a low operating cost.

Another aim of the invention is to provide such a device that effectively enables two biomasses to be obtained, a liquid one and a solid one, starting from an organic sewage, particularly a sewage of zootechnic origin, more in particular a sewage coming from pig-breeding activities.

Another aim of the invention is to provide such a device that, albeit having contained overall dimensions, is effective and efficient in use, and possibly transportable in a relatively simple way from one animal-breeding centre to another.

Yet a further aim of the invention is to provide a process of the type referred to at the start of the present description that is particularly advantageous for obtaining biomasses of homogeneous quality in a simple and economically advantageous way.

Another aim of the invention is to provide such a device and such a process that is advantageously also enable execution of a process of depuration for the liquid fraction of the sewage at an extremely contained cost, with modest occupation of space.

A further aim of the invention is to provide a process based upon the use of a flaking material as filtering mass that has the characteristics of not being a waste material but a raw material, of capturing (biological, chemical and mineral) macro- and micro-components present in the sewage, of being favourable to onset of a degradative biological process, of being favourable to colonization on the surfaces and in the cavities of said materials of the micro-organisms responsible for onset of the biological processes of degradation and depuration, of being totally compatible and favourable to use in the production of energy and of organic fertilizers, above all for use in the growth of crops of high sanitary quality for alimentary purposes.

### Summary of the invention

One or more of the above aims are achieved, according to the present invention, by a device and a process for obtaining biomasses starting from an organic sewage, particularly a sewage of zootechnic origin having a high liquid component or fraction, which has the characteristics specified in the claims. The claims form an integral part of the technical teaching provided herein in relation to the invention.

### Brief description of the drawings

Further purposes, characteristics and advantages of the invention will emerge from the ensuing description of a simplified embodiment of the invention, provided with reference to the annexed drawings, wherein:
- Figure 1 is a schematic cross-sectional view of a device according to the present invention;
- Figure 2 is a schematic view in side elevation and in partial cross section of a first operative section of the device of Figure 1;
- Figure 3 is a schematic view in elevation of a percolation column forming part of the operative section of Figure 2;
- Figure 4 is a first schematic cross section of the percolation column of Figure 3;
- Figure 5 is a second schematic cross section of the percolation column of Figure 3; and
- Figures 6 and 7 are schematic views in side elevation and in partial cross section of a second operative section and a third operative section of the device of Figure 1.

### Description of preferred embodiments of the invention

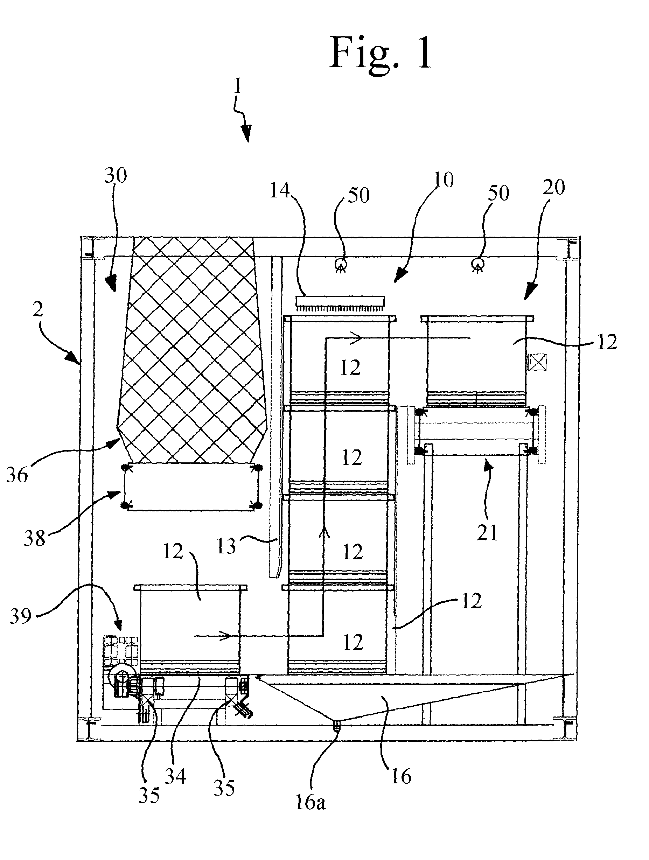

Represented in a schematic cross section in Figure 1 is a device according to the present invention, designated as a whole by 1.

In said figure, designated by 2 is a containment structure of the device 1, preferably provided with a ventilation system (not represented). The structure 2 can consist, for example, of a metal framework closed on the sides and at the top via a sheeting or else be formed by a container. Preferentially, the structure 2 is of a self-supporting type, which can advantageously be lifted for being transported on the back of a lorry or on a trailer. In the example of embodiment illustrated, the containment structure 2 has dimensions of approximately 12 m in length, approximately 2.6 m in height and approximately 2.5 m in width or depth. In the example of embodiment, the device 1 is designed to operate at room temperature, but to the containment structure 2 there can be associated a conditioning system (heating/cooling) and/or a thermostating system.

Inside the containment structure 2 three operative sections are identified, which are set alongside one another in the longitudinal direction of the device 1; namely:
- a section, designated as a whole by 10, for enriching with a filtering/aggregating material, particularly a flaking material;
- a section for evacuation and unloading, designated as a whole by 20; and
- a loading section, designated as a whole by 30.

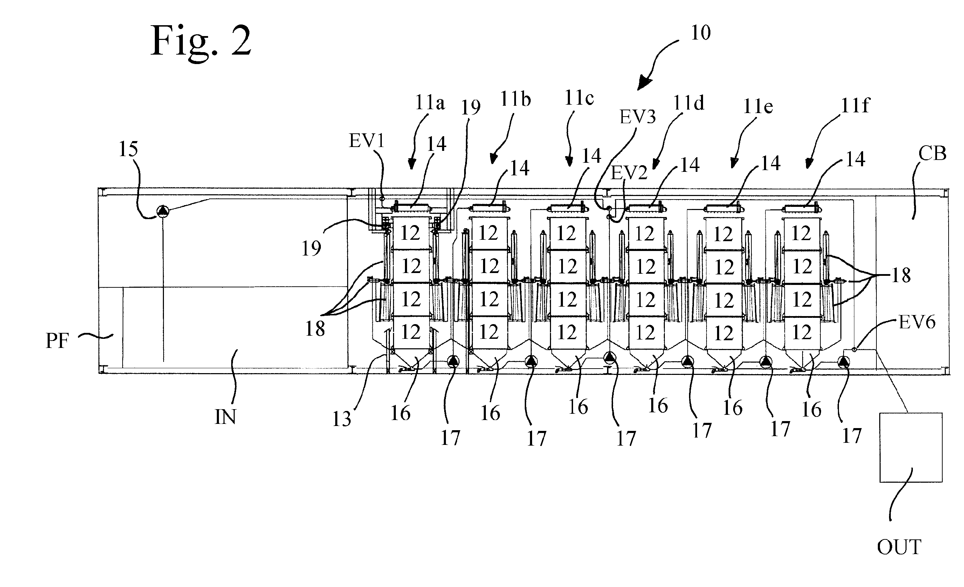

The enriching section 10, which constitutes the main part of the device, is represented in front view in Figure 2. In the example of embodiment as shown, the section 10 comprises a system of percolation towers or columns 11, each of which is formed by a plurality of containers stacked on top of one another, designated by 12, provided for containing respective masses of filtering/aggregating material, not represented in the figures, preferentially constituted by flaking material. In the sequel of the present description, the containers 12 will be defined as "drawers" in so far as they can be slid into/out of a structure of the corresponding column 11. In the non-limiting example shown, six columns 11 are provided, each of which is constituted by four drawers 12 stacked on top of one another; of course the number indicated of columns 11 and drawers 12 stacked on top of one another is to be understood merely as an example. For greater clarity of exposition of the operation of the device 1, in Figure 2 combined to the reference 11 of the columns are the letters a-f.

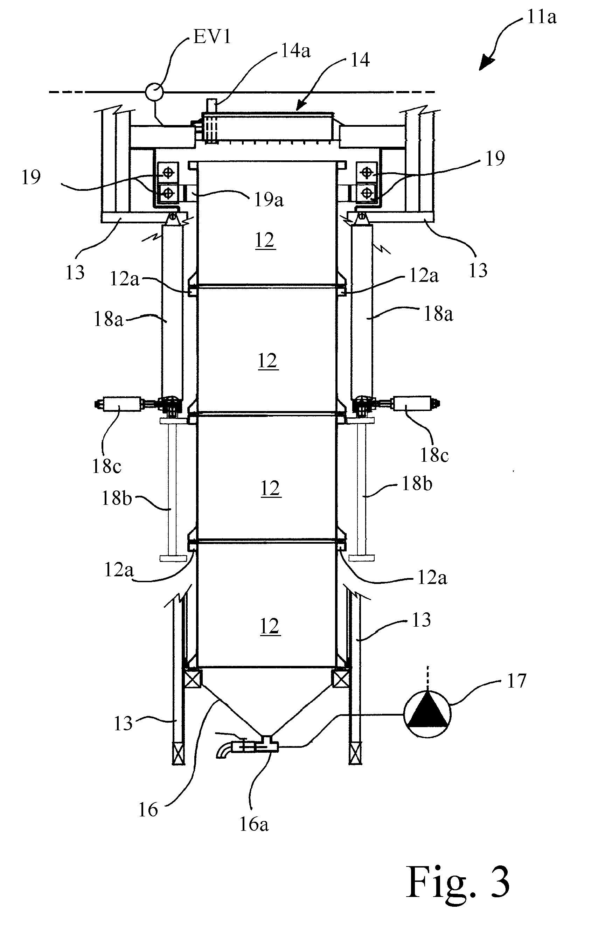

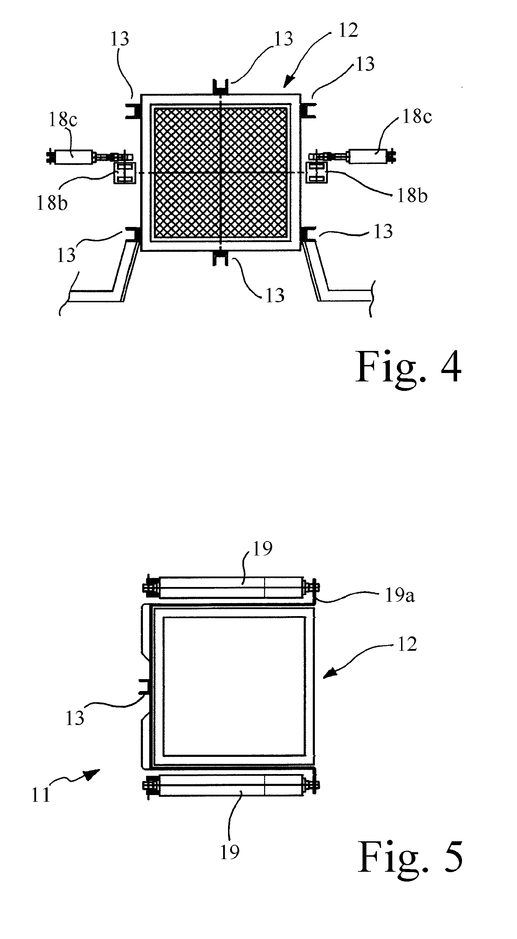

As may be seen also in Figure 3, the drawers 12 are stacked on top of one another within a respective metal supporting and guide structure, extending vertically, some parts of which are designated by 13 (see also Figure 4). Each column 11 has reduced overall dimensions; in the non-limiting example of embodiment considered herein, each column 11 has an overall height of approximately 2 m and sides of approximately 0.5 m.

The drawers 12 are identical to one another and have side walls made of sheet metal. The top of the drawers 12 is open, whilst the corresponding bottom is formed by a perforated sheet of metal or by a wire mesh, with holes or passages having a diameter or section of passage of less than 5 mm, preferably approximately 3-4 mm. Said sizings enable an efficient treatment via a flaking material, which is preferably used for the formation of the filtering/aggregating masses used in the percolation process implemented via each column 11. Each drawer 12 can have a capacity indicatively comprised between 50 and 200 litres.

Provided at the top of each column 11 - i.e., above the upper drawer 12 - is a distributor or diffuser member 14, for supply of the sewage, designed for substantially uniform distribution of the incoming sewage over the upper area of the mass contained in said upper drawer. For this purpose, in Figure 2, designated by IN is an inlet tank, for containment of pre-treated sewage; via a suitable duct and a pump 15 of the device 1, the sewage is brought from the tank IN to the diffuser 14 that overlies the upper drawer 12 of the column 11a.

The device 1 can enable connection of all the columns 11 in series, or else organization thereof in a number of batteries designed to operate in parallel (in the example, one battery formed by the columns 11a-11c and one battery formed by the columns 11d-11f), in which case the duct connected to the delivery of the pump 15 supplies the upper drawer 12 of the first column of each battery (the columns 11a and 11d, in the example considered). For this purpose, along the aforesaid duct valves EV1 and EV2 are provided. It is in any case evident that the device could possibly be conceived so that all the columns 11 work in parallel.

To return to the example considered in Figure 2-3, provided underneath each column 11 - i.e., underneath the corresponding lower drawer 12 - is a tank 16 for collection of the residual liquid resulting from the process of treatment implemented by the column itself. The tank 16 is provided with a corresponding outlet coupling 16a (Figures 1 and 3), for evacuation of said residual liquid.

The coupling 16a is in fluid communication with a respective pump 17, which, via a duct, transfers the contents of the tank 16 of one column 11 to the diffuser 14 of the next column 11. The residual liquid collected in the tank 16 of the last column (11f of Figure 2) is transferred to a general collection tank, designated by OUT in Figure 2, external to the device 1, for example for use in fertirrigation or else for use in hydroponic cultivation. For this purpose, provided on the duct connected to the delivery of the last pump 17 (of the column 11f in Figure 2) is a valve EV6. To enable operation in batteries, moreover provided on the duct connected to the delivery of the pump 17 of the last column (11c in Figure 2) of the first battery (11a-11c) is a valve EV3.

In the operation in series, the sewage is fed from the tank IN to the diffuser 14 of the column 11a, with the six columns 11a-11f that operate in cascaded fashion and with the valve EV1 open and the valve EV2 closed; discharge towards the tank OUT is obtained via the pump 17 of the last column 11f, with the valve EV3 closed and the valve EV6 open. For operation with batteries in parallel, instead, the sewage is fed to the diffusers 14 of the columns 11a and 11d, with the valves EV1 and EV2 open; discharge towards the tank OUT is obtained via the pump 17 of the last column of each battery (i.e., the columns 11c and 11f), with the valves EV3 and EV6 open.

It is in any case evident that the hydraulic circuit for feed of the sewage and for discharge of the residual liquid of the system of columns 11 can be implemented freely by the person skilled in the branch. Preferentially, the connections of the pipes external to the two tanks IN and OUT, for feed of the sewage and for evacuation of the depurated liquid, are provided by fast-block couplings, suitable for ensuring hydraulic tightness.

The structure 13 of each column 11 basically defines a flow-path, in which the drawers 12 are inserted stacked on top of one another, in order to extend in a direction transverse to the path itself and so that the sewage that flows from the diffuser 14 towards the tank 16 is able to traverse in sequence the filtering masses contained in the drawers. In the simplest embodiment of the device 1, as illustrated in the figures, the drawers 12 rest directly on top of one another, i.e., they are directly stacked on top of one another; edge regions of the bottom of the last drawer 12 of the stack instead rest on purposely designed cross members belonging to the structure 13.

As may be appreciated, in this way, in the aforesaid flow-path a plurality of positions of lie in height for the drawers 12 are identified, namely, an upper position, a lower position, and two intermediate positions (in the example considered herein of four drawers).

Preferentially, the structure 13 is shaped in such a way that only the drawers 12 that each time occupy the aforesaid upper and lower positions can be slid into and slid out of the structure 13, as may be appreciated for example from Figure 1. The drawers 12 are moreover set within the structure 13 so as to be able to slide vertically therein, within the flow-path, i.e., in the region substantially comprised between the diffuser 14 and the tank 16, in order be able to vary the corresponding position of lie in height thereof, after at least one of the drawers that occupy the aforesaid upper and lower positions has been taken out of the structure. In particular, if the drawer 12 that occupies the upper position in the column 11 is removed, all the remaining drawers 12 can be raised, so that the second drawer will come to occupy the upper position, and the fourth drawer will free the lower position, in which a new drawer can be inserted. For this purpose, the structure 13 can comprise, for example, uprights shaped and/or sized (see, for example, Figures 1 and 4) so as to prevent extraction of the drawers 12 that each time occupy the aforesaid two intermediate positions, said uprights moreover functioning as guide, containing any possible lateral displacements of the drawers of the stack when this, after extraction of the upper drawer, is displaced vertically, as explained hereinafter.

Operatively associated to the structure 13 of each column are raising means, for example comprising a system of hydraulic pistons on each of two opposite sides of the structure, as designated as a whole by 18 in Figure 2. These raising means 18 can be built according to any known technique. Merely by way of indication, as may be seen in Figures 3 and 4, the raising devices 18 provided on the two opposite sides of a column 11 can comprise each a system of hydraulic pistons, comprising at least one first piston 18a (or a number of pistons set in series), provided with an engagement member 18b, designed to co-operate with respective projecting elements or contrast elements 12a of the drawers 12 (such as a flange), and a second piston 18c, transverse to the pistons 18a, which can be operated to bring about engagement of the member 18b with the corresponding projection 12a of the drawer. Basically, then, after the upper drawer 12 of a column 11 has been removed, the pistons 18c are operated to bring about engagement of the members 18b with the projecting side elements 12a on the two opposite sides of the lower drawer of the column; next, actuation of the pistons 18a causes raising of said lower drawer, thereby displacing upwards also the two drawers that occupied the intermediate positions of the column 11.

In order to pull out the drawer 12 that each time occupies the upper position in the column 11, associated to the structure 13 are extractor means, designed to bring about a linear translation or sliding of said drawer outside the structure, on the front thereof. Also the expeller devices associated to each column 11 can be obtained using any known technique. In the example illustrated in Figures 3 and 5, two pairs 19 of hydraulic pistons in series are provided, connected to a substantially C-shaped metal band 19a, which surrounds preferably on three sides the drawer 12 that each time occupies the upper position in the column. Actuation of the pistons 19 brings about advance of the band 19a and hence translation of the drawer.

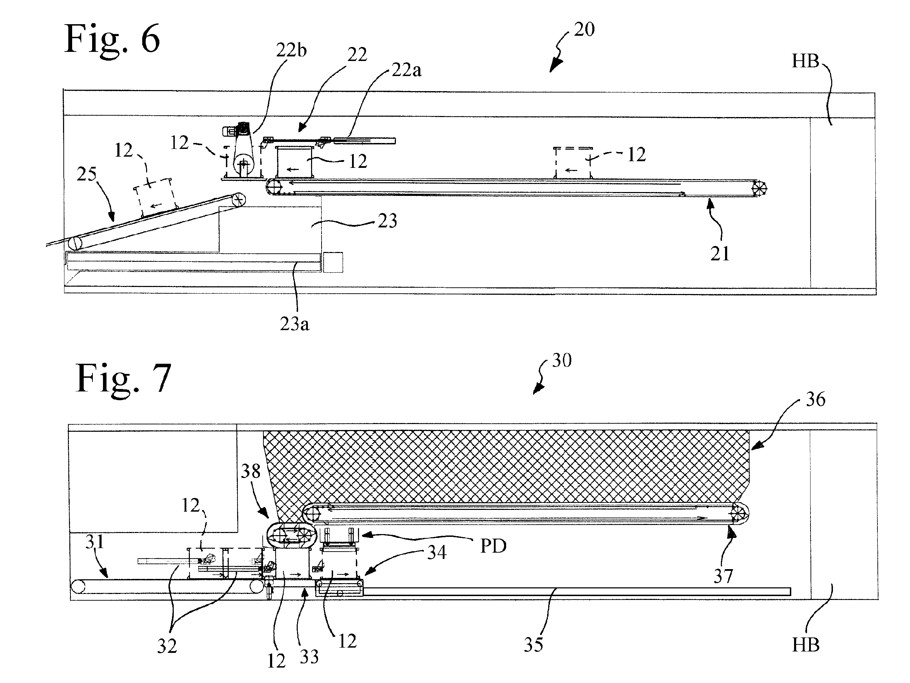

Following upon translation, the upper drawer 12 in the column 11 is displaced into the unloading section 20, represented in front view in Figure 6. In particular, the upper drawer 12 is translated so that it moves onto a conveyor 21, preferably a belt conveyor (see also Figure 1), said conveyor extending in length in front of the various columns 11, at a height such as to be able to receive thereon the corresponding upper drawers 12, when they are taken out. As may be noted from Figure 1, the tanks 16 are shaped preferentially to extend as far as underneath the conveyor 21 so as to collect any possible residual liquid that drops from the drawer during extraction from the column.

The conveyor 21 brings about advance of the drawer each time taken out from a column as far as a tipping station, represented only schematically in Figure 6, where it is designated as a whole by 22. Also this station can be built with techniques in themselves known. In the example shown, the station 22 comprises a pusher device 22a, designed to displace the drawer 12 that is found at the outlet end of the conveyor 21 in order to bring it onto a tipping device 22b, possibly provided with a vibrator. The tipping device 22b rotates the drawer 12 through approximately 180° so that its contents drop into an underlying container 23. Associated to said container 23 is an auger 23a for discharge of the saturated material outside the device 1.

The tipping device 22b then rotates the drawer 12 in the opposite direction, allowing it then to drop from a small height onto a second conveyor 25, which carries the drawer itself as far as an outlet guide (not represented), on which the drawer slides just by gravity, and then comes out the device 1, in an area where an operator is present. In this area, once again inside the device 1, the drawer is preferentially flushed clean. The drawer 12 can then be picked up manually by the operator, who positions it by hand on the loading section 30.

As may be seen in Figure 7, the section 30 comprises a conveyor 31, preferably a belt conveyor, which carries the drawer 12 as far as a movement or pusher device 32. Also said device 32 can be built according to any known modality, its function being basically that of pushing the drawer 12 off the conveyor 31 onto a fixed loading station, designated by 33, and then translating it further from the station 33 onto a trolley 34. Said trolley 34 is movable, being motor-driven, on corresponding guides 35 (see also Figure 1), which extend in length behind the various columns 11, at a height substantially corresponding to that of the lower drawers of the columns themselves.

Above the station 33 and the guides 35 there extends a hopper tank 36 containing fresh filtering/aggregating material, provided with a upper loading hatch (not represented) and with a bottom constituted by an endless belt 37. Actuation of said endless belt 37 is designed to cause the filtering/aggregating material to reach an outlet opening of the tank 36, set in a position corresponding to which is a dispensing device 38, which can also be built according to techniques in themselves known, said dispensing device 38 overlying the loading station 33. When the drawer 12 arrives on the station 33, the dispensing device 38 is operated in such a way that in the drawer a dosed amount of filtering/aggregating material will drop by gravity. Once the loading step has terminated, the pusher device 32 causes advance of the drawer 12, from the station 33 to the loading trolley 34, which in said step is at a proximal end of the guide 35. In said position, as illustrated in Figure 7, the trolley 34 comes underneath a pressing device PD, which can also be built in a way in itself known, having the function of pressing the mass of fresh material from above, and thus compacting it and homogenizing it inside the drawer 12.

Next, the trolley 34 is moved along the corresponding guides 35, until it is brought into a position corresponding to the column 11, the lower position of which is at the moment free (the overlying drawers being kept in a raised position via the raising means 18a-18c of Figure 3).

The trolley 34 is provided with inserter means 39, represented only schematically in Figure 1, which can consist, for example, of a pantograph system, or else a scissor-like mechanism, which can be actuated via a hydraulic cylinder; nothing prevents on the other hand, in principle, use of inserter means built in a way conceptually similar to the expeller means of Figure 5. The means 39 push the drawer 12 from the trolley 34 within the structure 13 of the column involved in such a way that the drawer will come to occupy the lower position. After said operation, the raising means 18 of the column can be disabled, in such a way that the weight of the three overlying drawers 12 will be sustained by the lower drawer, which has just been inserted in the corresponding column.

The device 1 is preferentially also provided with a system for flushing with water, comprising pipes and nozzles in a fixed position (some of which are visible in Figure 1, where they are designated by 50), possibly integrated by at least one high-pressure movable gun. Said flushing system makes it possible to carry out cleaning of the device 1 when required or else automatically in the output area of the section 20. The areas that are subject to particular dirtying are the area of mechanical pre-filtration (described hereinafter), the columns 11, the tanks 16, the tipping station 22, and the outlet conveyor 21, where the drawers 12 can be flushed clean continuously before their reintroduction into the section 30. The conveyor 23a for the saturated material will be preferentially flushed at the end of each working cycle of the device 1 in order to prevent encrustations and hardening by the material itself.

As explained previously, the starting sewage used in the device 1 is a sewage coming from animal breeding, preferably pig breeding or possibly cattle breeding, and each drawer 12 contains a respective filtering/aggregating mass, having the task of capturing the macroscopic and microscopic particles of organic, chemical, and mineral substances present in the sewage that flows by gravity towards the collection tank 16 of a column.

In the preferred embodiment, the filtering/aggregating masses are formed with a flaking material. These materials, in addition to presenting physical and chemical properties that render them particularly suited to the application considered herein, are designed to form, together with other organic solids and with the soluble solids withheld from the sewage as it passes, a biomass that possesses a good physical structure and characteristics suitable for producing energy and a good amending agent and/or organic fertilizer. Flaking materials preferred for use in the process according to the present invention are of vegetable origin, for example selected from among maize stalks, shredded straw or hay, chopped cereals, cellulose, weeds, peat, algae, as well as waste from sawmills and timber, such as wood shavings, sawdust, bark shavings.

Excellent results for the production of the biomasses can be obtained by causing an enzymatic or bacterial bio-activation of the flaking material, for example via addition of a consortium of bacteria and fungi, designed to enable acceleration and control of the processes of degradation of the organic fraction of the sewage. A consortium that can be used for the purpose is the one made available by the applicant under the brand name "Enzyveba" (to the technical documentation of which the reader is referred for further details). The use of such a product is particularly advantageous in so far as the bacterial and fungal species are naturally self-selected during the production cycle, developing a consortium having a wide range of enzymatic activities, capable of acting in the presence of markedly heterogeneous matrices, and in which said bacteria and fungi contained in the microbial consortium develop the enzymes necessary for degradation of the various organic fractions with which they come into contact.

It has moreover been found that the best results, in terms of formation of the biomass and of depuration of the liquid fraction of the sewage, can be obtained with an aggregating mass formed by a bed of flaking material in the form of wafers having a height (in the direction of flow of the sewage) comprised between approximately 10 and 50 cm according to the flaking material used. Said height, or thickness, of the mass moreover enables preservation of excellent physical characteristics of the biomasses obtained, also for the purposes of manual or automated handling and movement of the drawers and of the subsequent steps of discharge of the saturated material. A preferred cross section of traversal of the flaking material is approximately 0.25 m².

As has been said, in each column 11 the sewage traverses in sequence the filtering masses contained in the drawers 12, with a percolation by gravity alone, in the absence of pressure. The flaking material constituting the aggregating masses withholds the solid fraction of the sewage (biological, chemical, and mineral macro- and micro-components), including the part in emulsion, up to saturation thereof, whilst the corresponding liquid fraction is progressively accumulated in the tank 16, from which it can then be evacuated through the coupling 16a.

The filtering/aggregating masses are replaced cyclically when they reach saturation point, starting from the first drawer that is traversed by the sewage in its motion of advance, with a method of rotation that goes preferably from the bottom upwards. For this purpose, as explained previously, the drawer that occupies the upper position within the flow-path and that contains the corresponding mass that is saturated can be removed from the structure 13. The remaining drawers are then translated upwards within the structure 13; in the free lower position a new drawer 12 is inserted, containing the corresponding new filtering mass. This method of rotation of the drawers is evidently repeated cyclically so that each of the drawers 12, and hence of the corresponding filtering/aggregating masses, will occupy in sequence all the positions within the flow-path, from bottom upwards, thus guaranteeing qualitative uniformity of the biomasses obtained in the various drawers 12.

With the process described, by using a good flaking material and of a highly active sewage, it is possible to obtain from the saturated filtering masses a biomass that is optimally suited for producing energy and organic fertilizers and amending substances, which are also compatible for entering a possible composting cycle (decomposition of the organic material in aerobic conditions of contact between the biomass and the air). The saturated aggregating masses, enriched with carbon, can be used for the production of fuel for industrial use, or else for entering a process of anaerobic digestion with production of biogas, or again in an aerobic process with or without earthworms.

The residual liquid fraction that collects in the tank OUT, which itself constitutes a biomass, contains an organic load, which is reduced on average by 90%, including the mineral and chemical charges, which are also reduced by approximately 90%. These waters of recovery of the process described are rich in positive microfauna and, appropriately oxidized, can also be used, for example, as nutrient for hydroponic cultures to be re-used in the anaerobic-digester process for producing energy and fertilizers and/or raw material for the pharmaceutical and cosmetic industry, or for animal feed. This percentage reduction by means of the present invention can be regulated also according to the requirement of organic and mineral charges necessary for the hydroponic cultures used.

As has been said, the columns 11 can operate in series in order to optimize the quality, or else in batteries in parallel in order to maximize the quantity of residual liquid recovered, the two modalities of use being selectable so as to control accordingly the positions of all the valves and the adjustments of the pumps of the device. The clarified sewage that percolates from the 24th drawer of the six columns 11 operating in series (or else from the 12th drawer of each of the two batteries operating in parallel) is pumped by the last pump 17 (or by the last two pumps 17 of each battery) directly into the tank OUT; from this tank, which has a capacity suitable for containing the sewage collected throughout the interval between two successive depuration treatments, may also be distributed on the ground by the animal breeder.

According to a preferential aspect of the invention, percolation through the filtering masses occurs in the absence of pressure of the sewage in order to prevent formation of preferential paths within the masses themselves. In accordance with a preferential characteristic of the invention, feed of the sewage to the diffuser 14 of the first column 11a (or 11a and 11d, in the case of operation in parallel) occurs continuously, with reduced flowrate, and is interrupted when the saturation of the mass contained in the upper drawer 12 of any column is reached. Detection of saturation of the mass is made, in the example of embodiment presented herein, via a sensor 14a mounted preferentially, but not necessarily, on the diffuser 14 of each column so as to face the inside of the upper drawer. In a possible embodiment, the sensor is pre-arranged for detecting formation and duration of a layer of liquid over surface of the mass; in the event of saturation, in fact, the sewage is no longer able to traverse the mass, with consequent accumulation of liquid on top of it. The sensor 14 that can be used for detecting the formation of the aforesaid thin layer of water may, for example, be a conductive sensor or a capacitive sensor, or a sensor of some other type suitable for the purpose. Conductive and capacitive sensors that can be used for this purpose are, for example, those marketed by the company M.M.T. s.r.l., Capralba (Province of Cremona), Italy (the reader is referred to the relevant technical documentation).

In the case of use of a sensor of this type, the sensor itself has a support provided with an electric or fluid actuator, which can be operated to bring about raising of the sensor and hence subsequent extraction of the drawer. Alternatively, a sensor 14 in a fixed position can be used, such as a proximity sensor, an optical sensor, a laser sensor, or an ultrasound sensor, according to a technology in itself known in the sector of contactless level sensors.

A typical example of overall operation of the device 1 is described in what follows.

The sewage as such, coming from a general accumulation tank of the animal-breeding farm undergoes pre-filtering, before being drawn in by means of the pump 15. For this purpose, a filtering device, designated as a whole by PF in Figure 2, separates the coarse parts of the sewage, receiving them in a container (not represented), in order to reduce mechanical clogging of the drawers 12 and enable maximum biological absorption of the corresponding flaking masses. The pre-filtration is preferentially of a mechanical type and is designed to withhold solid particles larger than 0.1 mm, and suitable for allowing the residual liquid to flow, which is collected in the tank IN; the pre-filtration can be carried out in discontinuous regime, irrespective of the cycle of percolation of the sewage in the columns 11. The mechanical-filtration device may, for example, be constituted by a solid-liquid separator device of the wormscrew type. Using both of the principles of separation, by gravity and by squeezing, the device receives the sewage and separates the liquid phase through the openings of a cylindrical screen that envelops an auger. Along its path towards the outlet, the material separates progressively the less bound liquid and then the more bound liquid, until it form a "plug" proper of dry material at the outlet of the device, which is expelled continuously via the auger. A separator device that can be used for this purpose is, for example, the one identified by the brand name Sepcom®, manufactured by the company WAMGROUP S.p.A., Ponte Motta / Cavezzo (Province of Modena), Italy, to the technical documentation of which the reader is referred.

Of course, the pump 15, which draws in from the tank IN pre-filtered sewage, is governed by level controls present in said tank. The coarse solid material separated by the filter PF can be mixed with the filtering/aggregating saturated material discharged from the device 1.

The pre-filtered sewage present in the tank IN is delivered, via the pump 15, to the diffuser 14 that is located above the upper drawer of the first column 11a (or on the two upper drawers of the columns 11a and 11d in the operation in parallel). The sewage penetrates into the upper drawer and, by gravity, percolates to the underlying ones, until the residual liquid is collected in the corresponding tank 16; from each tank 16, the corresponding pump 17 transfers the residual liquid to the diffuser 14 of the next column. As has been said, the residual liquid remaining in the tank 16 of the last column 11f of the system (or of the last column of the corresponding battery 11a-11c, 11d-11f) is transferred to the collection tank OUT.

During the cycle, the mass of flaking material traversed by the sewage withholds and absorbs part of the solids up to saturation point, which is highlighted by the incapacity for allowing percolation of the liquid phase from the upper drawer of the column to the underlying drawer. Said condition, which can be detected via successive readings made by the sensor 14a in the ways described above, brings about arrest of percolation, i.e., interruption of the operation of the pump 15 and starts the mechanical cycle of replacement of the drawer in question. Said operation occurs automatically and envisages the following main steps:
- expulsion of the upper drawer 12, containing the saturated mass, from the corresponding column 11 via the extractor means 19, with corresponding deposition of the drawer on the conveyor 21 of the unloading section, which carries the drawer itself to the tipping station 22;
- raising or lifting of the three drawers remaining in the column, via the raising means 18;
- picking-up of a drawer 12 loaded with fresh flaking material, which is brought by the trolley 34 as far as the column in question and then pushed, via the inserter means 39 associated to the trolley, within the corresponding structure 13, to occupy the lower position currently free; this is followed by deactivation of the raising means 18; and
- restarting of the supply pump 15 for restart-up of the cycle.

The drawer 12 taken out of the column 11 is carried by the conveyor 21 to the tipping station, where the tipping device 22b empties out the contents thereof into the container 23, from which the auger conveyor 23a transfers it outside the device 1, for example into a silo, or else onto a tip-up lorry. From the station 22 the empty drawer is then released on the conveyor 25, and is then flushed clean and leaves the device 1, where it is picked up manually by the operator.

The operator transfers the empty drawer 12 onto the conveyor 31 of the loading section 30, which comprises the hopper tank 36. Note that the operator hence moves only empty drawers having a contained weight (less than 20 kg), transferring them from the outlet of the unloading section to the inlet of the loading section, which are very close to one another. The operator operates outside the containment structure and does not come into contact with the fresh flaking material nor with the saturated material.

In the loading section 30, at the end of the conveyor 31, the pusher device 32 transfers the empty drawer 12 to the station 33, where the drawer itself is loaded with fresh flaking material. Next, the device 32 itself displaces the drawer 12 onto the trolley 34. The trolley 34 is controlled for positioning the drawer 12 on the rear of the column 11, the lower position of which is currently free, with the inserter means 39 that then introduce the drawer into said position. When the operations of change of drawer have been carried out, the percolation cycle is restored, with reactivation of the pump 15.

The times of saturation of the filtering/aggregating masses decrease proportionally to the position occupied by the corresponding drawer 12 in the column (minimum time for the drawer in the upper position and maximum time for the lower drawer). The duration of the cycle is evidently minimum for the first column and maximum for the last column.

Each pump 17 has preferentially a variable capacity, which can be adjusted upon setting of the cycle, and in any case is governed by level switches provided in the tanks 16; of course, during the step of replacement of a drawer 12 of a column, the pump 17 that supplies the column in which the replacement occurs is not active.

Preferentially, the structures 13 of each column 11 with the corresponding tank 16, as well as the load-bearing structures of the section 20 for unloading and section 30 for loading of the drawers, connected to the structures 13, are made in steel structural work, in particular stainless steel, and are firmly anchored to a single base (not illustrated). Said base is preferentially surrounded by a channel for containment of the sewage that may occasionally be spilt. As may be seen, on one side of the columns (the one previously indicated as rear side) the drawers loaded with the fresh flaking material are inserted, whereas on the opposite side (the one indicated as front side) the upper drawers containing the saturated flaking mass are expelled. Suitable partitions, not represented, preferentially separate each column from the adjacent ones, in order to minimize any spilling, contamination, or mechanical interference.

The various functions of the device 1 are controlled by means of an electronic processor, for example of a PLC type, which regulates sequentially all the movements of the mechanical members controlled hydraulically (raising means, extractor means, inserter means, etc.) or electrically (pumps, valves, conveyors, trolley, dispenser, etc.) and manages the safety devices. The electric control board of the device 1 may be located in the area designated by CB in Figure 2, whilst the oleodynamic power unit for controlling the various hydraulic actuators can occupy the areas designated by HB in Figures 6 and 7. As has been said, moreover, the control system of the device is provided also with sensors means 14a, for checking the state of saturation of the flaking masses contained in the upper drawers and for checking the level of liquid present in the tanks 16 and in the tank IN; preferentially, also provided are position sensors, such as limit switches, optical or proximity sensors, encoders and the like, for verifying reaching of the correct operative position of movable members of the device 1 (raising means, inserter means, extractor, trolleys, etc.) and/or of the position of the drawers in the various steps (end of the conveyor 21, position of the trolley 34, etc.).

The characteristics and advantages of the invention emerge clearly from the foregoing description. The device described is extremely compact and simple to produce, and its operating costs are very modest. The device, built in steel structural work with contained dimensions and costs, and the corresponding process, enable reduction of nitrates and other excess elements which are negative in the use, in agriculture, of zootechnic sewage, especially sewage coming from pig breeding.

The contained dimensions of the device enable use thereof also in animal-breeding farms of small size. The biomasses that can be obtained with the process according to the present invention have excellent characteristics in view of their use as fertilizers, amending agents, or for the production of energy. The process moreover enables, albeit with apparatuses of small dimensions, solid biomasses to be obtained having homogeneous characteristics and quality, thanks to the method of rotation of the drawers described, accompanied by very contained system and operating costs. The device is safe and hygienic for the personnel, in so far as the single operator called upon to supervise operation of the device works in the open air, where there does not exist any contamination (all the operations on the sewage and on the saturated material are circumscribed inside the containment structure 2 of the device).

It should again be noted that, given the contained dimensions of the device according to the present invention, it can be conveniently transported from one animal-breeding centre to another, for example on a lorry or else on a trailer. In this regard, it should be noted, for example, that on the back of a lorry 6 m in length it is possible, for instance, to load alongside one another two complete devices 1, each comprising three columns 11, which can operate in parallel, or else be connected in series if need be, guaranteeing respectively, in the two modalities, a high throughput and a maximum quality.

Obviously, each column may be configured so as to have a number of drawer containers 12 different from the one represented in the example, starting from a minimum of two.

In more sophisticated arrangements than the one described by way of example, means can be provided for detecting analytical parameters so as to know at any moment the percentage of reduction of the organic, chemical, and mineral charge of the liquid fraction that exits from one or more drawers of each column, it being possible for said liquid fraction to be then used in other processes.

In the process according to the present invention, the cyclical rotation of the containers, which in the non-limiting example described occurs vertically, can occur on a carousel, also horizontally, but once again according to the principle that the liquid treated passes consecutively from one drawer or tank to the other with the same procedure.

The invention has been described with particular reference to the treatment of a sewage of zootechnic origin, but can be applied also to the case of other sewage with high liquid fraction, such as sewage of agroindustrial origin, such as milk serum or agroindustrial process water.

## Claims

1. A device for obtaining and/or enriching biomasses from a sewage having a liquid fraction and a solid fraction, particularly an organic sewage, such as a sewage of zootechnic origin, the device being of the type that provides for passage of the sewage through filtering masses, particularly filtering and aggregating masses made of a flaking material, such that the filtering masses retain at least part of the solid fraction of the sewage, wherein
- the device (1) comprises a treatment section (10) including one or more percolation units (11a-11f), particularly each of which is configured as a percolation column having a vertically extended structure (13), to each percolation unit (11a-11f) there being operatively associated supplying means (14) of the sewage, or of a liquid fraction thereof, and collecting means (16) of at least part of a liquid fraction of the sewage, each percolation unit (11a-11f) defining, between the supplying means (14) and the collecting means (16), a flow-path along which the sewage, or a liquid fraction thereof, can flow;
- along the flow-path a plurality of containers (12) can be sequentially arranged in the structure (13), particularly drawer containers, each container (12) having a wall provided with opening having dimensions such as to retain the material forming a respective filtering mass, the containers (12) extending in a transverse direction relative to the flow-path and in such positions as to be sequentially crossed at least by the liquid fraction of the sewage,
- the device further comprises automated means (18, 19, 39) for displacing the containers (12) of the percolation unit or units (11a-11f), arranged to expel and/or remove in a selective manner at least one container (12) of said plurality relative to the structure (13) of a respective percolation unit (11a-11f), in order to carry out at least one of
- a removal and/or a replacement of filtering masses that are saturated from time to time, and
- a change of the position, particularly of the height position, of the containers (12) within the flow-path of the respective percolation unit (11a-11f).

2. The device according to claim 1, wherein
- the structure (13) is configured such that at least one first container (12) of said plurality is extractable from the structure (13), particularly in a sliding manner and in a transverse direction relative to the flow-path, and
- the automated means for displacing (18, 19, 39) comprises expeller means (19), configured for expelling said first container (12) from the structure (13), particularly by displacing it in said transverse direction.

3. The device according to claim 2, wherein
- the structure (13) is configured such that at least one second container (12) of said plurality is displaceable in a substantially sliding fashion in a height direction of the flow-path, after said first container (12) of the plurality has been expelled from the structure (13), and
- the automated means for displacing (18, 19, 39) comprise lifter means (18), configured to displace said at least one second container (12) in said height direction.

4. The device according to claim 3, wherein
- the structure (13) is configured such that at least one further container (12) can be inserted in the structure (13), particularly in a sliding fashion and in a transverse direction relative to the flow-path, after said at least one second container (12) has been displaced in said height direction, and
- the automated means for displacing (18, 19, 39) comprise inserter means (39), configured to insert said at least one further container (12) in the structure, particularly by displacing it in said transverse direction.

5. The device according to at least one of claims 2 to 4, wherein the structure (13) defines a plurality of positions for the containers (12), among which at least one upper position, a lower position and one or more intermediate positions, and wherein the structure (13) is arranged (2) such that the displacement in a transverse direction relative to the flow-path is only possible for the containers (12) that from time to time are in the upper position or in the lower position.

6. The device according to claim 1, further having one unloading section (20) of the containers (12) that comprises at least one of:
- automated carrier means (21), configured for receiving a container (12) expelled from the structure (13) and moving it away from the corresponding percolation unit (11a-11f); and
- automated tipping means (22), configured for overturning a container (12) expelled from the structure (13) and discharging the saturated filtering mass thereof.

7. The device according to claim 1, further having one loading section (30) of the containers (12) that comprises at least one of:
- a store (36) for supplying fresh filtering material destined to form said masses, the store for supplying (36) being provided with an outlet having associated thereto automated dosing means (38) of the filtering material;
- a presser device (PD), configured for pressing from above a dosed amount of fresh filtering material loaded into a respective container (12), in order to compact said dosed amount;
- automated carrier means (34, 35), configured for leading a container (12) containing a dosed amount of fresh filtering material at a percolation unit (11a-11f) in the structure (13) of which said container (12) has to be inserted.

8. The device according to claims 6 and 7, wherein the treatment section (10), the unloading section (20) and the loading section (10) are placed side by side longitudinally, the treatment section (10) being between the unloading section (20) and the loading section (30).

9. The device according to at least one of the preceding claims, wherein the treatment section (10) has a hydraulic system configured such that the percolation units (11a, 11b) of a plurality of percolation units:
- are connected in series, or
- are organized in at least two sets (11a-11c, 11d-11f) which operate in parallel, the units of each set being connected in series, or
- can be alternatively connected in series or organized in at least two sets (11a-11c, 11d-11f) operating in parallel, the units of each set being connected in series.

10. The device according to claims 6 and 7, further comprising a control system (CB), particularly an electronic control system, configured for managing operation of the treatment section (10), the unloading section (20) and the loading section (30).

11. The device according to claim 1, further comprising at least one of:
- means (15) for supplying in continuous the sewage to be treated,
- means (14a) for detecting a condition of saturation of the filtering mass contained in a container (12), and
- control means (CB) for stopping a supply in continuous of the sewage when a condition of saturation of the filtering mass contained in a first container (12) is detected, the control means (CB) being preferably arranged also for starting a cycle of replacement of said first container in the corresponding percolation unit (11a-11f).

12. A process for obtaining and/or enriching one biomass from a sewage having a liquid fraction and a solid fraction, particularly an organic sewage, such as a sewage of zootechnic origin, of the type in which the sewage is made to pass through filtering masses, particularly made of a flaking material, such that the filtering masses retain at least part of the solid fraction of the sewage, including the part in emulsion, and wherein each filtering mass, when saturated, is removed and replaced with a new filtering mass, each saturated filtering mass constituting a biomass, the process comprising the steps of:
- providing a structure (13) that defines a flow-path for the sewage between an inlet (14) and an outlet (16);
- providing along the flow-path a plurality of containers (12) that are extractable from the structure (13), the plurality comprising a first and a second end container (12), each container (12) housing a respective filtering mass, the containers of the plurality (12) being preferably in superimposed positions within the flow-path;
- expelling at least the first end container (12) of the plurality from the structure (13), to remove the saturated filtering mass thereof and replace it with a new filtering mass;
- changing the position within the flow-path, particularly the height position, of the other containers (12) of the plurality, including the second end container; and
- inserting in the structure (13) at least one further container (12), not belonging to said plurality and containing a new filtering mass, in the position previously occupied by the second end container of the plurality.

13. The process according to claim 12, wherein the flow-path is configured to define a plurality of height positions for the containers of the plurality (12), among which an upper position, a lower position and one or more intermediate positions, and wherein the containers of the plurality (12) are adapted to occupy from time to time different height positions within the flow-path, the process comprising the operations of:
- expelling from the flow-path the first container (12) of the plurality, that occupies the said upper position, when the corresponding filtering mass is saturated;
- raising the other containers (12) of the plurality along the flow-path, such that the said upper position becomes occupied by the container (12) of the plurality being successive to the container (12) which has been expelled from the flow-path and the last container (12) of the series frees the said lower position;
- inserting in the structure (13), in said lower position, the said one further container (12).

14. The process according to claim 12 or 13, wherein at least the material forming a filtering mass is made to undergo an enzymatic or bacterial bio-activation, particularly by addition of a fungi and bacteria consortium.

15. The process according to claim 12, wherein:
- the sewage to be treated is supplied in continuous,
- the detection is provided of the condition of saturation of the filtering mass contained in a first container (12), and
- the supply in continuous of the sewage is stopped when the condition of saturation of the filtering mass contained in the first container (12) is detected,
where in particular, when said condition of saturation is detected, a cycle of automatic replacement of the first container (12) in the structure (13) is started.
